# EUROPÄISCHE PATENTSCHRIFT

(11) **EP 3 034 864 B1**
(45) Veröffentlichungstag und Bekanntmachung des Hinweises auf die Patenterteilung: **03.08.2022**
(21) Anmeldenummer: 15196986.2
(22) Anmeldetag: 30.11.2015
(51) Int. Cl.: F03D 1/06

(54) **ROTORNABE FÜR EINEN EINE ROTORACHSE AUFWEISENDEN ROTOR EINER WINDENERGIEANLAGE**
ROTOR HUB FOR A ROTOR OF A WIND POWER STATION WITH A ROTOR AXIS
MOYEU DE ROTOR POUR UN ROTOR PRESENTANT UN AXE DE ROTOR D'UNE EOLIENNE

(30) Priorität: 16.12.2014 DE 102014226126
(43) Veröffentlichungstag der Anmeldung: 22.06.2016
(73) Patentinhaber: Siemens Gamesa Renewable Energy Service GmbH, 20097 Hamburg (DE)
(72) Erfinder: Eusterbarkey, Carsten, 25813 Simonsberg (DE); Trede, Alf, 25885 Immenstedt (DE)
(74) Vertreter: dompatent von Kreisler Selting Werner - Partnerschaft von Patent- und Rechtsanwälten mbB

(56) Entgegenhaltungen:
- EP-A1- 2 562 081
- EP-A2- 1 930 584
- DE-A1- 10 351 524

## Beschreibung

Die Erfindung betrifft eine Rotornabe für einen eine Rotorachse aufweisenden Rotor einer Windenergieanlage.

Eine wesentliche Zielrichtung bei der Entwicklung von Windenergieanlagen ist es, dass diese stets leistungsfähiger werden. Maßgeblich für die Leistungsfähigkeit von Windenergieanlagen ist unter anderem die Größe bzw. der Durchmesser des Rotors. Dadurch, dass die Rotorblätter länger bzw. größer werden, erhöhen sich auch die Belastungen für die Rotornabe. Dies gilt gleichermaßen für Rotornaben, die direkt von einer Welle gestützt werden, als auch für Rotornaben, die drehbar an beispielsweise dem Maschinengehäuse bzw. der Gondel oder aber einem Bauteil des Maschinengehäuses bzw. der Gondel gelagert sind.

Aus DE-A-10 2007 014 860 ist eine Rotornabe mit einem wechselseitig verschraubten Wellenflansch bekannt (siehe z.B. Fig. 3a dieser Schrift). Der Wellenflansch weist eine Flanschfläche mit einem inneren und einem äußeren Lochkreis auf, wobei der äußere Lochkreis zur Verschraubung der Nabe von außerhalb derselben mit der Welle und der innere Lochkreis zur Verschraubung der Rotornabe von innerhalb derselben mit der Welle vorgesehen ist.

DE-A-103 51 524 zeigt in Fig. 1a eine Nabe, die längs eines äußeren Lochkreises mit Innenflansch mit einem Rotorlager verbunden ist und an einem inneren Lochkreis mit einer Kupplungsscheibe verbunden ist.

In DE-U-20 2004 016 206 ist eine Nabe mit einer Rotorwelle beschrieben, die sich durch die Nabe hindurch bis zu deren vorderen Ende erstreckt.

In WO-A-01/42647 ist eine Nabenkonstruktion gezeigt, die eine rohrförmige Innenversteifung aufweist. Diese Innenversteifung erstreckt sich konzentrisch zur Rotorachse durch die Nabe von deren hinteren bis zu deren vorderen Ende hindurch.

Schließlich zeigt WO-A-2012/131025 in Fig. 1a eine Rotornabe, die an einem hohl ausgebildeten Achszapfen drehbar gelagert ist. Der Achszapfen steht von dem Maschinengehäuse ab und erstreckt sich durch die Nabe hindurch. Die Nabe ist an einer vorderen und an einer hinteren Lagerstelle drehbar am Achszapfen gelagert. Das vordere Ende der Nabe, über das der Achszapfen übersteht, ist durch eine Verkleidung (sogenannter Spinner) abgedeckt. An dem dieser Verkleidung gegenüberliegenden Ende ist die Nabe direkt mit dem Anker eines Ringgenerators verbunden.

Weitere Konstruktionen von Rotornaben für Windenergieanlagen sind aus EP-A-1 933 027, EP-A-2 653 719 und WO-A-2003/064854 bekannt.

Ferner sind aus EP-A-2 562 081 und EP-A-1 930 584 Rotornaben bekannt, die zur Anbringung an einer Welle vorgesehene Anbringungsanschlussabschnitte mit axial nach innen zur Nabe hin versetzten Innenflanschen aufweist.

Aufgabe der Erfindung ist es, eine Nabe für einen eine Rotorachse definierenden Rotor einer Windenergieanlage zu schaffen, wobei die Rotornabe verwindungssteif ist und damit den Belastungen, denen Rotornaben zukünftiger Generationen von Windenergieanlagen mit erhöhter Leistung ausgesetzt sind, standhält.

Zur Lösung dieser Aufgabe wird mit der Erfindung eine Rotornabe für einen eine Rotorachse aufweisenden Rotor einer Windenergieanlage vorgeschlagen, wobei die Rotornabe versehen ist mit den Merkmalen des Anspruchs 1.

Die zuvor genannte Aufgabe wird erfindungsgemäß ebenfalls gelöst durch eine Naben/Drehelement-Anordnung, insbesondere Naben/Wellen-Anordnung für den Rotor einer Windenergieanlage, wobei diese Anordnung versehen ist mit den Merkmalen des Anspruchs 11 oder 13.

Einzelne Ausgestaltungen der Erfindung sind jeweils Gegenstand der Unteransprüche.

Nach der Erfindung ist sinngemäß vorgesehen, dass die Rotornabe ein innerhalb der Rotornabe angeordnetes Versteifungselement aufweist, das nahe dem Anbringungsanschlussabschnitt der Rotornabe angeordnet ist. Damit versteift dieses Versteifungselement die Rotornabe in dessen zur Welle bzw. zu einem Rotorlager des Maschinengehäuses weisenden Anbringungsende. Wenn dieses Anbringungsende im Anbringungsanschlussabschnitt der Rotornabe beispielsweise einen Nabenflansch aufweist, so wird dieser Nabenflansch durch das Versteifungselement stabilisiert. Zusätzlich kann die erfindungsgemäße Rotornabe auch noch über Versteifungselemente für die Blattanschlussabschnitte verfügen. Dies ist aber nach der Erfindung nicht zwingend erforderlich.

Das erfindungsgemäß vorgesehene Versteifungselement befindet sich innerhalb der Rotornabe bzw. innerhalb von dessen Hohlkörper und steht von dessen Innenseite nach innen hinein in Richtung auf die Rotorachse bzw. deren Verlängerung ab. Dabei befindet sich das Versteifungselement innerhalb desjenigen Bereichs des Hohlkörpers, der sich zwischen dem Anbringungsanschlussabschnitt und dem Schnittpunkt der Rotorachse mit der oder den Rotorblattachsen erstreckt. Das Versteifungselement kann sich innerhalb einer - bezogen auf die Rotorachse - Radialebene oder zumindest in Teilbereichen winklig zur Radialebene, d.h. schräg nach vorn oder nach hinten erstrecken.

Die erfindungsgemäße Rotornabe weist neben dem Anbringungsanschlussabschnitt ihres Hohlkörpers mindestens zwei Blattanschlussabschnitte auf, an denen Rotorblattachsen definierende Rotorblattanordnungen anbringbar sind. Bei diesen Rotorblattanordnungen kann es sich entweder um ein Rotorblatt oder aber um ein Rotorblatt mit Rotorblattdrehlager handeln. Beide Varianten lassen sich bei der erfindungsgemäßen Rotornabe realisieren.

Durch das erfindungsgemäße Versteifungselement werden die auf die Rotornabe wirkenden Belastungen während des Betriebs der Windenergieanlage besser verteilt, so dass die Gefahr potenzieller Verformungen der Rotornabe reduziert werden. Dies gilt insbesondere für Rotor-Kippmomente und für den Rotornabenflansch zur Abstützung der Rotornabe an einer Welle oder zur Verbindung mit einem Rotordrehlager. Dieser Flansch wird durch das erfindungsgemäß vorgesehene Versteifungselement entlastet; insbesondere wird die Gefahr einer Ovalisierung des Flansches vermindert.

Wie bereits oben erwähnt, verfügt eine Rotornabe für eine Windenergieanlage im Regelfall über einen Anbringungsflansch zur Verbindung der Rotornabe mit einer Welle oder einem Rotorlager des Maschinengehäuses (bzw. Gondel) der Windenergieanlage. Die vom Flansch definierte Öffnung weist einen Öffnungsdurchmesser auf. Ebenso bilden die Bohrungen des Flansches, durch die sich Verschraubungs- oder andere Verbindungselemente zur Verbindung der Rotornabe mit der Welle oder einem Rotorlager erstrecken, eine Kreislinie mit einem den Radius des Kreises definierten Durchmesser. In bevorzugter Ausgestaltung der Erfindung kann nun vorgesehen sein, dass das Versteifungselement vom Anbringungsflansch um mindestens 20% des Flanschöffnungs- oder Flanschlochkreisliniendurchmessers beabstandet ist, wobei das Versteifungselement aber immer noch vor dem Schnittpunkt der Rotorachse mit einer oder mehreren der Rotorblattachsen angeordnet ist (bei Betrachtung der Rotornabe von dem Anbringungsflansch aus und in die Rotornabe hinein).

Der Abstand des Versteifungselements vom Anbringungsanschlussabschnitt der Rotornabe lässt sich beispielsweise durch den Abstand zweier Radialebenen definieren, d.h. durch den Abstand zweier Ebenen, die radial zur Rotorachse verlaufen. In der einen Radialebene befindet sich der Anbringungsanschlussabschnitt, also beispielsweise der Anbringungsflansch, insbesondere die Ringfläche des Anbringungsflansches, während sich in der anderen Ebene der axial am weitesten vom Anbringungsanschlussabschnitt angeordnete Bereich des Versteifungselements befindet. Mit anderen Worten erstreckt sich erfindungsgemäß also der am weitesten vom Anbringungsanschlussabschnitt entfernt liegende Teil des Versteifungselements längs der Erstreckung der Rotorachse in einem Abstand von mindestens 20% des Öffnungsdurchmessers des Anbringungsflansches bzw. von mindestens 20% des Durchmessers des Lochkreises des Flansches von dem Anbringungsanschlussabschnitt, insbesondere der Ringfläche des Anbringungsflansches.

In weiterer zweckmäßiger Ausgestaltung der Erfindung kann vorgesehen sein, dass das Versteifungselement integraler Bestandteil des Hohlkörpers ist. Normalerweise besteht die Rotornabe aus Gusseisen, so dass das Versteifungselement zusammen mit dem Hohlkörper der Rotornabe gießtechnisch hergestellt und gegebenenfalls nachbearbeitet wird. Alternativ ist es aber auch möglich, das Versteifungselement separat vom Hohlkörper herzustellen, um dann beide mechanisch miteinander zu verbinden. Auch diese Variante soll von der Erfindung erfasst werden und bietet den Vorteil, dass die Gussformen des Hohlkörpers in dieser Variante einfacher gestaltet werden können.

In weiterer zweckmäßiger Ausgestaltung der Erfindung kann vorgesehen sein, dass das Versteifungselement als ein um die Rotorachse herum verlaufender Versteifungsring ausgebildet ist. Unabhängig von seiner Ausbildung als Versteifungsring kann das Versteifungselement gänzlich in einer Radialebene zur Rotorachse oder aber auch winklig dazu verlaufen. Das Versteifungselement in Form des Versteifungsrings weist eine sich in Umfangsrichtung wiederholende Geometrie auf, wobei zweckmäßigerweise sich abwechselnde steife und weiche Bereiche vorhanden sind. Zweckmäßigerweise sind so viele steif bzw. weich ausgebildete Sektorbereiche vorhanden, wie an der Rotornabe Rotorblätter anbringbar sind. Mit anderen Worten ist hierbei also vorgesehen, dass der Versteifungsring mehrere Sektorbereiche aufweist, wobei die Dicken-, Breiten- und/oder Umfangsabmessungen des Versteifungsrings in verschiedenen Sektorbereichen gleich oder unterschiedlich sind, und dass der Versteifungsring so viele bezüglich der Abmessungen des Versteifungsrings gleiche Sektorbereiche aufweist, wie Blattanschlussabschnitte an dem Hohlkörper existieren, wobei diese Sektorbereiche in Umfangsrichtung des Versteifungsrings beabstandet voneinander sind. Diese Symmetrie des Versteifungselements ist also auf die Anzahl von Rotorblättern abgestimmt.

Bei einer besonders bevorzugten Ausgestaltung der Erfindung dient der Versteifungsring zusätzlich auch der Abstützung der Rotornabe an der Welle, mit der die Rotornabe verbunden ist und von der die Rotornabe getragen wird. Die Rotornabe ist also in diesem Ausführungsbeispiel an zwei Stellen mit der Welle verbunden. An dem Anbringungsanschlussabschnitt des Hohlkörpers der Rotornabe ist diese fest mit der Welle verbunden, während der Versteifungsring bzw. allgemeiner gesprochen, dass Versteifungselement sich an einer zweiten Stelle, die in Rotationsachse betrachtet axial beabstandet zur ersten Stelle ist, zusätzlich abstützt. Zur Kompensation von Fertigungstoleranzen ist es dabei in einer besonders bevorzugten Ausführungsform vorgesehen, dass zwischen dem Versteifungselement und der Welle ein Keilring o.dgl. Ausgleichselement angeordnet ist, mit dem sich ein eventuell gegebener Ringspalt zwischen Versteifungselement und Welle ausfüllen lässt.

Bei der zuvor beschriebenen Weiterbildung der Erfindung ist also vorgesehen, dass der Anbringungsanschlussabschnitt des Hohlkörpers zur Befestigung an einer Welle vorgesehen ist und dass der Innenöffnungsrand an der Welle abstützbar ist, und zwar längs der Rotationsachse axial beabstandet zu dem Anbringungsanschlussabschnitt des Hohlkörpers ist.

In dem zuvor genannten Ausführungsbeispiel der Erfindung dient also das Versteifungselement zusätzlich auch der Abstützung der Nabe auf der Welle, die von der Nabe während des Betriebs der Windenergieanlage angetrieben wird. Eine zweite Stützstelle erhöht ganz entscheidend die Festigkeit und Stabilität der Rotornabe, was erfindungsgemäß von großem Vorteil hinsichtlich der Aufnahme der Rotor-Kippmomenten und Reduktion der potenziellen Verformungen der Rotornabe ist. Hierdurch wird die Verschraubung zwischen dem Hohlkörper und der Welle erheblich entlastet.

Wie bereits oben beschrieben, kann die Rotornabe statt einer starren Verbindung mit einer Welle des Maschinengehäuses mit einem Rotorlager des Maschinengehäuses verbunden bzw. an diesem Rotorlager drehbar gelagert sein. In diesem Fall existiert an dem Hohlkörper der Rotornabe ein Befestigungsanschlussabschnitt zur Wirkverbindung des Hohlkörpers mit einem drehend antreibbaren Drehelement, bei dem es sich beispielsweise um eine zu einem Getriebe führenden Welle oder aber, bei getriebelosen Energieanlagen, zu einem Generator führende Welle handelt. Alternativ ist es auch möglich, dass es sich bei diesem drehend antreibbaren Drehelement um den Anker, also den drehenden Teil eines Ringgenerators handelt, wie dies beispielsweise in WO-A-2012/131025 gezeigt ist.

Zweckmäßig kann es sein, wenn der Befestigungsanschlussabschnitt an dem Versteifungselement ausgebildet ist. Damit übernimmt das Versteifungselement neben der Stabilitätsfunktion auch die Funktion der Wirkverbindung der Rotornabe mit dem von diesem drehend antreibbaren Drehelement.

Aus Gewichtersparungsgründen kann es zweckmäßig sein, das Versteifungselement mit Durchbrechungen zu versehen. Derartige Durchbrechungen sind aus montagetechnischen Gründen ebenfalls von Vorteil, um die Rotornabe im Bereich des Anbringungsanschlussabschnitts des Hohlkörpers an einer Welle zu befestigen, wobei der Innenöffnungsrand an einer Welle, einem drehend antreibbaren Drehelement oder einem Rotordrehlager des Maschinengehäuses montiert und im Bedarfsfalle demontiert werden kann, und zwar insbesondere dann, wenn das Versteifungselement zusätzlich auch zur Abstützung an einer Welle des Maschinengehäuses genutzt wird.

Weitere einzelne Ausgestaltungen der Erfindung sind Gegenstand der Unteransprüche.

Die Erfindung wird nachfolgend anhand mehrerer Ausführungsbeispiele und unter Bezugnahme auf die Zeichnung näher erläutert. Im Einzelnen zeigen dabei:
- Fig. 1: eine Vorderansicht auf eine Windenergieanlage,
- Fig. 2: eine Halbschnittansicht entlang der Linie II-II der Windenergieanlage nach Fig. 1 mit einem ersten Ausführungsbeispiel für die Verbindung der Rotornabe mit einer Welle zur Stützung der Rotornabe,
- Fig. 3: eine Halbschnittansicht entlang der Linie III-III der Fig. 2,
- Fig. 4: eine Halbschnittansicht der Verbindung der Rotornabe mit einer sie tragenden Welle des Maschinengehäuses einer Windenergieanlage bei der das Versteifungselement nicht zur weiteren Stützung der Rotornabe auf der Welle genutzt wird,
- Fig. 5: eine Halbschnittansicht ähnlich der gemäß Fig. 2 durch eine alternativ ausgebildete Rotornabenanordnung, bei der die Rotornabe drehbar an einem Rotorlager des Maschinengehäuses gelagert ist und
- Fig. 6: eine weitere Ausgestaltung einer möglichen Rotornabenanordnung, bei der die Rotornabe ebenfalls drehbar an einem Rotorlager des Maschinengehäuses gelagert ist, wobei dieses Maschinengehäuse einen Ringgenerator aufweist.

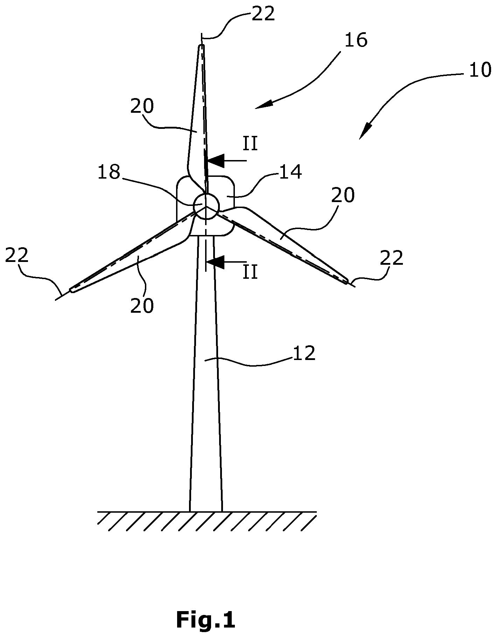

In Fig. 1 ist von vorne eine Windenergieanlage 10 mit einem Turm 12 und einem um eine Vertikalachse drehbar mit dem Turm verbundenen Maschinengehäuse 14 gezeigt. An dem Maschinengehäuse 14 bzw. einem drehbaren Element des Maschinengehäuses 14 ist der Rotor 16 drehbar gelagert, und zwar um eine Horizontalachse, wobei der Rotor 16 eine Rotornabe 18 und in diesem Ausführungsbeispiel drei Rotorblätter 20 aufweist. Die Rotorblätter 20 können um ihre Achsen 22 drehbar gelagert sein.

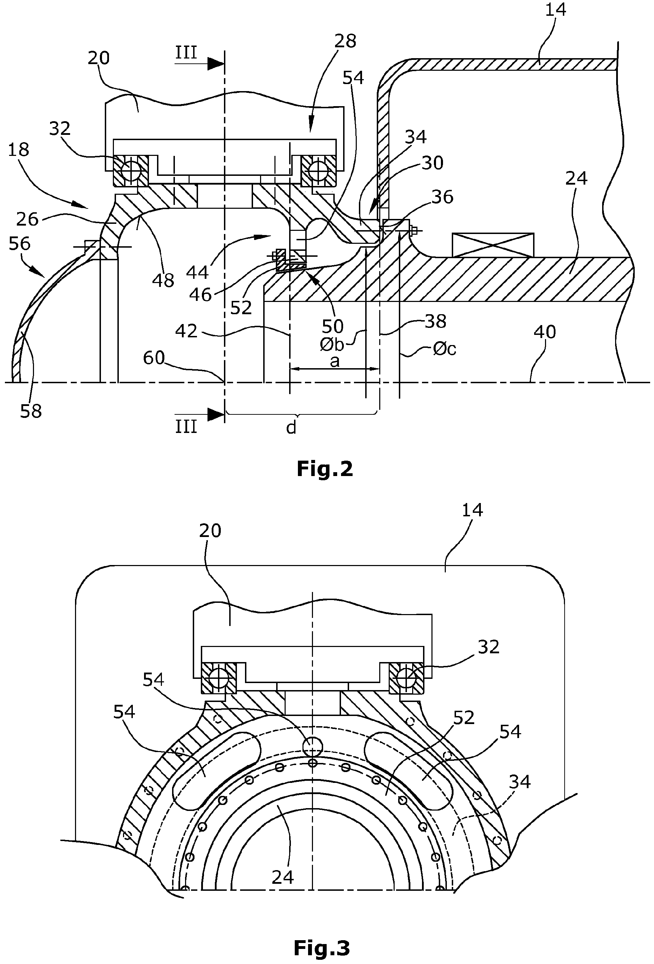

Fig. 2 zeigt einen Halbschnitt entlang der Linie II-II durch die Rotornaben/Wellenanordnung am Maschinengehäuse 14. In dem Maschinengehäuse 14 befindet sich eine drehbar gelagerte Welle 24 die teilweise in die Rotornabe 18 eingetaucht ist. Die Rotornabe 18 weist einen Hohlkörper 26 auf, der in diesem Ausführungsbeispiel drei Blattanschlussabschnitte 28 und einen Anbringungsanschlussabschnitt 30 aufweist. Während an den Blattanschlussabschnitten 28 jeweils eine Rotorblattanordnung (Rotorblatt 20 mit oder ohne Rotorblattlager 32) befestigt ist, dient der Anbringungsanschlussabschnitt 30 der Rotornabe 18 der Befestigung des Hohlkörpers 26 an der Welle 24. Hierzu weist der Anbringungsanschlussabschnitt 30 einen Flansch 34 mit Bohrungen bzw. Löchern zur Verbindung des Hohlkörpers 26 mit der Welle 24 auf.

Während sich der Flansch 34 bzw. eine Ringfläche 36 des Anbringungsanschlussabschnitts 30 des Hohlkörpers 26 in einer ersten Radialebene 38 befindet, die radial zur Rotorachse 40 verläuft, erstreckt sich in einer weiten Radialebene 42 ein Versteifungselement 44, das in diesem Ausführungsbeispiel als umlaufender Versteifungsring 46 ausgebildet ist. Das Versteifungselement 44 bzw. der Versteifungsring 46 stehen von der Innenseite 48 des Hohlkörpers 26 schräg einwärts oder radial einwärts in Richtung auf die Rotorachse 40 ab. In dem in den Fign. 2 und 3 gezeigten Ausführungsbeispiel stützt sich der Versteifungsring 46 an einer längs der Rotorachse 40 axial vom Anbringungsanschlussabschnitt 30 beabstandeten Abstützbereich 50 an der Welle 24 ab. Zwischen dem Versteifungselement 44 und der Welle 24 kann im Abstützbereich 50 ein Keilring 52 positioniert sein, der mit dem Versteifungselement 44 beispielsweise durch Verschraubungen verbunden ist. Im Versteifungselement 44 können sich noch Durchbrüche 54 befinden, was beispielsweise auch in Fig. 3 zu erkennen ist. Bei diesen Durchbrechungen 54 handelt es sich beispielsweise um Montageöffnungen oder bei großen Rotornaben um Mannlöcher, die bei der Montage der Rotorblätter 20 von Vorteil sein können.

An dem dem Anbringungsanschlussabschnitt 30 gegenüberliegenden vorderen Ende 56 des Hohlkörpers 26 der Rotornabe 18 befindet sich beispielsweise ein Verkleidungselement 58 (sogenannter Spinner), der sich in einer alternativen Ausführung auch um die gesamte Nabe herum bis in den Bereich des Flansches 30 erstrecken kann.

Wie anhand von Fig. 2 zu erkennen ist, sind die beiden Radialebenen 38 und 42 um den Abstand a axial voneinander beabstandet. Bei diesem Abstand a handelt es sich um mindestens 20% des Durchmessers b des vom Flansch 34 bzw. der Ringfläche 36 umgebenden Öffnung bzw. des Durchmessers c des Lochmittelkreises für die Verschraubungen zwischen der Welle 24 und dem Anbringungsflansch 34. Das Versteifungselement 44 befindet sich in einem Bereich d, der sich zwischen dem Anbringungsanschlussabschnitt 30 und dem Mittelpunkt 60 der Rotornabe 18 befindet. Dabei ist der Mittelpunkt 60 der Rotornabe 18 definiert als Schnittpunkt der Rotorachse 40 mit den Rotorblattachsen 22. Die Rotorblattachsen 22 können hierbei auch nicht rechtwinklig zur Rotorachse 40 angeordnet sein (, und zwar in einem sogenannter Konuswinkel).

Durch das Versteifungselement 44 erhält der Anbringungsanschlussabschnitt 30 eine erhöhte Stabilität, insbesondere Steifigkeit, und zwar zunächst einmal unabhängig davon, dass das Versteifungselement 44 sich noch zusätzlich an der Welle 24 abstützt.

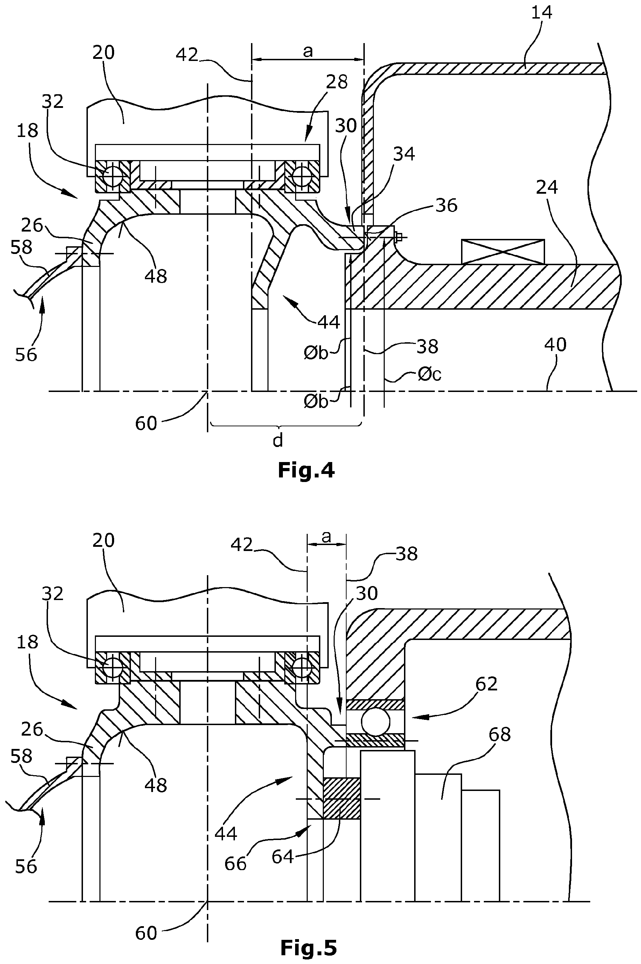

In Fig. 4 ist im Halbschnitt eine Variante einer Rotornaben/Wellen-Anordnung gezeigt, wobei soweit möglich, für Elemente, die den Elementen der Fign. 2 und 3 gleichen, gleiche Bezugszeichen verwendet sind.

Im Unterschied zur Anordnung gemäß den Fign. 2 und 3 wird in Fig. 4 das Versteifungselement 44 nicht zur zusätzlichen Lagerung und Abstützung des Hohlkörpers 26 der Rotornabe an der Welle 24 genutzt.

Fig. 5 zeigt im Halbschnitt eine Rotornaben/Drehelement-Anordnung, wobei hier ebenfalls, soweit wie möglich, die gleichen Bezugszeichen wie in den Fig. 1 bis 4 verwendet sind. Die Rotornabe 18 bzw. deren Hohlkörper 26 ist in diesem Ausführungsbeispiel an einem nur schematisch dargestellten Rotorlager 62 des Maschinengehäuses 14 gelagert. Das Versteifungselement 44 ist über eine Kupplungsscheibe bzw. einen Kupplungsring 64 mit einem Getriebe 68 drehend verbunden. Zu diesem Zweck weist das Versteifungselement 44 einen Befestigungsanbringungsabschnitt 66 zur Befestigung der Kupplungsscheibe bzw. des Kupplungsrings 64 auf. Die statischen und dynamischen Kräfte, die auf die Rotornabe 18 einwirken, werden von dem Rotorlager 62 aufgenommen. Das Versteifungselement 44 dient neben den oben bereits angesprochenen mechanischen Versteifungseigenschaften für die Rotornabe 18 auch zu deren Drehverbindung mit einem Getriebe und weiter mit einem Generator (nicht dargestellt).

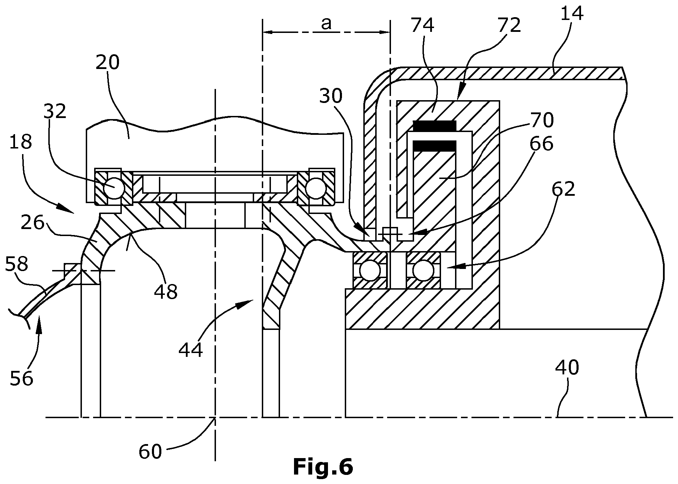

Ein letztes Ausführungsbeispiel einer Rotornaben/Drehelement-Anordnung ist in Fig. 6 schematisch gezeigt. Auch hier gilt wiederum, dass gleiche Elemente mit gleichen Bezugszeichen versehen sind.

Die Rotornabe 18 ist in diesem Ausführungsbeispiel wiederum an einem schematisch dargestellten Rotorlager 62 drehbar gelagert, das Teil des Maschinengehäuses 14 ist. Das Versteifungselement 44 ragt wiederum ins Innere des Hohlkörpers 26 der Rotornabe 18 hinein und versteift diese insbesondere in ihrem Anbringungsanschlussbereich 30. Zusätzlich weist dieser Anschlussanbringungsbereich 30 noch einen Befestigungsanschlussbereich 66 auf, an dem der Anker 70 eines Ringgenerators 72, der einen Stator 74 aufweist, befestigt ist. Auch hier gilt, dass das Rotorlager 62 die statischen und dynamischen Kräfte der Rotornabe 18 aufnimmt.

### BEZUGSZEICHENLISTE

- 10: Windenergieanlage
- 12: Turm
- 14: Maschinengehäuse
- 16: Rotor
- 18: Rotornabe
- 20: Rotorblätter
- 22: Rotorblattachsen
- 24: Welle im Maschinengehäuse
- 26: Hohlkörper der Rotornabe
- 28: Blattanschlussabschnitte
- 30: Anbringungsanschlussabschnitt
- 34: Anbringungsflansch
- 36: Ringfläche des Anbringungsflansches
- 38: Radialebene des Anbringungsflansches
- 40: Rotorachse
- 42: Radialebene des Versteifungselements
- 44: Versteifungselement
- 46: Versteifungsring
- 48: Innenseite des Hohlkörpers
- 50: Abstützbereich
- 52: Keilring
- 54: Durchbrechungen im Versteifungselement
- 56: vorderes Ende der Rotornabe
- 58: Verkleidungselement
- 60: Schnittpunkt der Rotorachsen mit den Rotorblattachsen (Mittelpunkt der Rotornabe)
- 62: Rotorlager
- 64: Drehelement in Form eines Kupplungsrings
- 66: Befestigungsanbringungsabschnitt
- 68: Getriebe
- 70: Drehelement in Form eines Ringgenerator-Ankers
- 72: Ringgenerator
- 74: Stator des Ringgenerators

## Patentansprüche

1. Rotornabe für einen eine Rotorachse aufweisenden Rotor einer Windenergieanlage, mit
- einem eine Innenseite (48) aufweisenden Hohlkörper (26), der einen Anbringungsanschlussabschnitt (30) zur Anbringung des Hohlkörpers (26) an einer Welle (24) oder an einem Rotorlager (62) eines Bauteils und mindestens zwei Blattanschlussabschnitte (28) zur Anbringung von Rotorblattachsen (22) definierenden Rotorblattanordnungen aufweist,
- wobei der Hohlkörper (26) um die Rotorachse drehbar positionierbar ist,
- einem mit dem Hohlkörper (26) verbundenen Versteifungselement (44), das von der Innenseite (48) des Hohlkörpers (26) in diesen nach innen hinein in Richtung auf die Rotorachse absteht,
- wobei das Versteifungselement (44) innerhalb desjenigen Bereichs (d) des Hohlkörpers (26) angeordnet ist, der sich zwischen dem Anbringungsanschlussabschnitt (30) und dem Schnittpunkt (60) der Rotorachse (40) mit der Verlängerung einer der Rotorblattachsen (22) erstreckt, und
- wobei der zur Anbringung des Hohlkörpers (26) an einer Welle (24) oder an einem Rotorlager (62) vorgesehene Anbringungsanschlussabschnitt (30) des Hohlkörpers (26)
- entweder eine Öffnung mit einem Öffnungsdurchmesser (b) aufweist, wobei das Versteifungselement (44) mindestens um 20% des Öffnungsdurchmessers (b) von dem Anbringungsanschlussabschnitt (30) beabstandet ist,
- oder mittels mehrerer längs einer Kreislinie angeordneter Verbindungselemente an einer Welle (24) anbringbar ist, wobei das Versteifungselement (44) mindestens um 20% des Kreisdurchmessers (c) von dem Anbringungsanschlussabschnitt (30) beabstandet ist.

2. Rotornabe nach Anspruch 1, **dadurch gekennzeichnet, dass** das Versteifungselement (44) integraler Bestandteil des Hohlkörpers (26) ist.

3. Rotornabe nach Anspruch 1 oder 2, **dadurch gekennzeichnet, dass** das Versteifungselement (44) als ein um die Rotorachse (40) herum verlaufender Versteifungsring (46) ausgebildet ist.

4. Rotornabe nach Anspruch 3, **dadurch gekennzeichnet, dass** der Versteifungsring (46) mehrere Sektorbereiche aufweist, wobei die Dicken-, Breiten- und/oder Umfangsabmessungen des Versteifungsrings (46) in verschiedenen Sektorbereichen gleich oder unterschiedlich sind, und dass der Versteifungsring (46) so viele bezüglich der Abmessungen des Versteifungsrings (46) gleiche Sektorbereiche aufweist, wie Blattanschlussabschnitte (28) an dem Hohlkörper (26) existieren, wobei diese Sektorbereiche in Umfangsrichtung des Versteifungsrings (46) beabstandet voneinander sind.

5. Rotornabe nach Anspruch 3 oder 4, **dadurch gekennzeichnet, dass** der Anbringungsanschlussabschnitt (30) des Hohlkörpers (26) zur Befestigung an einer Welle (24) vorgesehen ist, dass der Versteifungsring (46) eine Innenöffnung mit einem Innenöffnungsrand aufweist und dass der Innenöffnungsrand des Versteifungsrings (40) an der Welle (24) abstützbar ist, und zwar längs der Rotationsachse axial beabstandet zu dem Anbringungsanschlussabschnitt (30) des Hohlkörpers (26) ist.

6. Rotornabe nach einem der Ansprüche 1 bis 4, **dadurch gekennzeichnet, dass** der Anbringungsanschlussabschnitt (30) des Hohlkörpers (26) zur Drehverbindung mit einem Rotorlager (62) vorgesehen ist und dass der Hohlkörper (26) zusätzlich einen Befestigungsanschlussabschnitt (66) zur Wirkverbindung mit einem drehend antreibbaren Drehelement (64,70) aufweist.

7. Rotornabe nach Anspruch 6, **dadurch gekennzeichnet, dass** der Befestigungsanschlussabschnitt (66) an dem Versteifungselement (44) ausgebildet ist.

8. Rotornabe nach Anspruch 6, **dadurch gekennzeichnet, dass** der Befestigungsanschlussabschnitt (66) an dem Anbringungsanschlussabschnitt (30) des Hohlkörpers (26) ausgebildet ist.

9. Rotornabe nach einem der Ansprüche 1 bis 8, **dadurch gekennzeichnet, dass** das Versteifungselement (44) Durchbrechungen aufweist.

10. Rotornabe nach einem der Ansprüche 1 bis 9, **dadurch gekennzeichnet, dass** jede Rotorblattanordnung ein Rotorblatt und gegebenenfalls ein Rotorblattdrehlager aufweist.

11. Naben/Drehelement-Anordnung, insbesondere Naben/Wellen-Anordnung für den Rotor einer Windenergieanlage, mit einer Rotornabe nach einem der Ansprüche 1 bis 5, 9, 10, sofern die Ansprüche 9 und 10 auf einen der Ansprüche 1 bis 5 rückbezogen sind, mit
- einem drehend antreibbaren Drehelement in Form einer Welle (24), die mit der Rotornabe in Wirkverbindung steht und die Rotorachse (40) definiert,
- wobei der Anbringungsanschlussabschnitt (30) des Hohlkörpers (26) an einer ersten Position der Welle (24) an dieser befestigt ist.

12. Naben/Drehelement-Anordnung nach Anspruch 11, **dadurch gekennzeichnet, dass** sich das Versteifungselement (44) an einer längs der Rotorachse (40) axial von der ersten Position beabstandeten zweiten Position der Welle (24) an dieser abstützt.

13. Naben/Drehelement-Anordnung, insbesondere Naben/Wellen-Anordnung für den Rotor einer Windenergieanlage, mit einer Rotornabe nach einem der Ansprüche 1 bis 4 oder einem der Ansprüche 6 bis 10, sofern diese auf einen der Ansprüche 1 bis 4 rückbezogen sind, mit
- einem drehend antreibbaren Drehelement (64), das in einem ein Rotorlager (62) aufweisenden Bauteil angeordnet ist und die Rotorachse (40) definiert,
- wobei der Hohlkörper (26) um die Rotorachse (40) drehbar mit dem Rotorlager (62) verbindbar ist und
- wobei der Hohlkörper (26) in Wirkverbindung mit dem drehend antreibbaren Drehelement (64) steht.

14. Naben/Drehelement-Anordnung nach Anspruch 13, **dadurch gekennzeichnet, dass** das Versteifungselement (44) der Rotornabe (18) in Wirkverbindung mit dem drehend antreibbaren Drehelement (64) steht.

15. Naben/Drehelement-Anordnung nach Anspruch 13, **dadurch gekennzeichnet, dass** der Anbringungsanschlussabschnitt (30) der Rotornabe (18) in Wirkverbindung mit dem drehend antreibbaren Drehelement (64) steht.

## Claims

1. A rotor hub for a rotor of a wind energy plant having a rotor axis, comprising
- a hollow body (26) having an inside (48), the hollow body (26) having an attachment connection portion (30) for attaching the hollow body (26) to a shaft (24) or to a rotor bearing (62) of a component and at least two blade connection portions (28) for attaching rotor blade assemblies defining rotor blade axes (22),
- wherein the hollow body (26) can be positioned rotatably around the rotor axis,
- a stiffening element (44) connected with the hollow body (26), the stiffening element (44) projecting inwardly from the inside (48) of the hollow body (26) into the latter towards the rotor axis,
- wherein the stiffening element (44) is arranged within that area (d) of the hollow body (26) which extends between the attachment connection portion (30) and the intersection (60) of the rotor axis (40) with the extension of one of the rotor blade axes (22), and
- wherein the attachment connection portion (30) of the hollow body (26) provided for attaching the hollow body (26) to a shaft (24) or to a rotor bearing (62)
- either has an opening with an opening diameter (b), wherein the stiffening element (44) is spaced by at least 20 % of the opening diameter (b) from the attachment connection portion (30),
- or is attachable to a shaft (24) by several connecting elements arranged along a circular line, wherein the stiffening element (44) is spaced by at least 20 % of the circle diameter (c) from the attachment connection portion (30).

2. The rotor hub according to claim 1, **characterized in that** the stiffening element (44) is an integral component of the hollow body (26).

3. The rotor hub according to claim 1 or 2, **characterized in that** the stiffening element (44) is designed as a stiffening ring (46) passing around the rotor axis (40).

4. The rotor hub according to claim 3, **characterized in that** the stiffening ring (46) has several sector areas, wherein the thickness, width and/or circumference dimensions of the stiffening ring (46) are the same or different in different sector areas, and **in that** the stiffening ring (46) has as many sector areas which are the same with respect to the dimensions of the stiffening ring (46) as there are blade connection portions (28) on the hollow body (26), wherein said sector areas are spaced apart from one another in the circumferential direction of the stiffening ring (46).

5. The rotor hub according to claim 3 or 4, **characterized in that** the attachment connection portion (30) of the hollow body (26) is provided for attachment to a shaft (24), **in that** the stiffening ring (46) has an inner opening with an inner opening edge, and **in that** the inner opening edge of the stiffening ring (40) is supportable on the shaft (24), namely axially spaced along the axis of rotation from the attachment connection portion (30) of the hollow body (26).

6. The rotor hub according to any one of claims 1 to 4, **characterized in that** the attachment connection portion (30) of the hollow body (26) is provided for rotational connection with a rotor bearing (62), and **in that** the hollow body (26) additionally has an attachment connection portion (66) for operative connection with a rotatably drivable rotary element (64, 70).

7. The rotor hub according to claim 6, **characterized in that** the attachment connection portion (66) is formed on the stiffening element (44).

8. The rotor hub according to claim 6, **characterized in that** the attachment connection portion (66) is formed on the attachment connection portion (30) of the hollow body (26).

9. The rotor hub according to any one of claims 1 to 8, **characterized in that** the stiffening element (44) has breakthroughs.

10. The rotor hub according to any one of claims 1 to 9, **characterized in that** each rotor blade assembly has a rotor blade and, if necessary, a rotor blade pivot bearing.

11. A hub/rotary element assembly, in particular a hub/shaft assembly for the rotor of a wind energy plant, having a rotor hub according to any one of claims 1 to 5, 9, 10, provided that claims 9 and 10 are referred back to any one of claims 1 to 5, comprising
- a rotatably drivable rotary element in the form of a shaft (24) being in operative connection with the rotor hub and defining the rotor axis (40),
- wherein the attachment connection portion (30) of the hollow body (26) is mounted to the shaft (24) at a first position of the shaft (24).

12. The hub/rotary element assembly according to claim 11, **characterized in that** the stiffening element (44) is supported on the shaft (24) at a second position of the shaft (24) axially spaced from the first position along the rotor axis (40).

13. A hub/rotary element assembly, in particular a hub/shaft assembly for the rotor of a wind energy plant, having a rotor hub according to any one of claims 1 to 4 or any one of claims 6 to 10, provided that the latter are referred back to any one of claims 1 to 4, comprising
- a rotatably drivable rotary element (64) arranged in a component having a rotor bearing (62) and defining the rotor axis (40),
- wherein the hollow body (26) is rotatably connectable with the rotor bearing (62) about the rotor axis (40), and
- wherein the hollow body (26) is in operative connection with the rotatably drivable rotary element (64).

14. The hub/rotary element assembly according to claim 13, **characterized in that** the stiffening element (44) of the rotor hub (18) is in operative connection with the rotatably drivable rotary element (64).

15. The hub/rotary element assembly according to claim 13, **characterized in that** the attachment connection portion (30) of the rotor hub (18) is in operative connection with the rotatably drivable rotary element (64).

## Revendications

1. Moyeu de rotor pour un rotor présentant un axe de rotor d'une éolienne, doté
- d'un corps creux (26) présentant un côté intérieur (48), lequel présente une section de raccord de montage (30) destinée à monter le corps creux (26) sur un arbre (24) ou sur un palier de rotor (62) d'un composant et d'au moins deux sections de raccord de pale (28 destinées à monter des agencements de pale de rotor définissant des axes de pale de rotor (22),
- dans lequel le corps creux (26) est positionnable en rotation autour de l'axe de rotor,
- d'un élément de renfort (44) relié au corps creux (26), lequel dépasse du côté intérieur (48) du corps creux (26) dans celui-ci vers l'intérieur en direction de l'axe de rotor,
- dans lequel l'élément de renfort (44) est disposé à l'intérieur de la zone (d) du corps creux (26) s'étendant entre la section de raccord de montage (30) et le point d'intersection (60) de l'axe de rotor (40) et de l'extension d'un des axes de pale de rotor (22), et
- dans lequel la section de raccord de montage (30) du corps creux (26) prévue pour le montage du corps creux (26) sur un arbre (24) ou sur un palier de rotor (62)
- ou bien présente une ouverture avec un diamètre d'ouverture (b), dans lequel l'élément de renfort (44) est espacé de la section de raccord de montage (30) d'au moins 20 % du diamètre d'ouverture (b),
- ou bien peut être monté sur un arbre (24) au moyen de plusieurs éléments de liaison disposé le long d'une ligne circulaire, dans lequel l'élément de renfort (44) est espacé de la section de raccord de montage (30) d'au moins 20 % du diamètre du cercle (c).

2. Moyeu de rotor selon la revendication 1, **caractérisé en ce que** l'élément de renfort (44) fait partie intégrante du corps creux (26).

3. Moyeu de rotor selon la revendication 1 ou 2, **caractérisé en ce que** l'élément de renfort (44) est réalisé comme une bague de renfort (46) entourant l'axe de rotor (40).

4. Moyeu de rotor selon la revendication 3, **caractérisé en ce que** la bague de renfort (46) présente plusieurs zones de secteur, dans lequel les dimensions d'épaisseur, de largeur et/ou de circonférence de la bague de renfort (46) sont égales ou différentes dans les diverses zones de secteur, et **en ce que** la bague de renfort (46) présente autant de zones de secteur identiques en ce qui concerne les dimensions de la bague de renfort (46) qu'il existe de sections de raccord de pale (28) sur le corps creux (26), dans lequel ces zones de secteur sont à distance l'une de l'autre dans la direction circonférentielle de la bague de renfort (46).

5. Moyeu de rotor selon la revendication 3 ou 4, **caractérisé en ce que** la section de raccord de montage (30) du corps creux (26) est prévue pour être fixée à un arbre (24), **en ce que** la bague de renfort (46) présente une ouverture intérieure dotée d'un bord d'ouverture intérieure et **en ce que** le bord d'ouverture intérieure de la bague de renfort (40) peut s'appuyer sur l'arbre (24), à savoir axialement à distance de la section de raccord de montage (30) du corps creux (26) le long de l'axe de rotation.

6. Moyeu de rotor selon l'une des revendications 1 à 4, **caractérisé en ce que** la section de raccord de montage (30) du corps creux (26) est prévue pour être en liaison rotative avec un palier de rotor (62) et **en ce que** le corps creux (26) présente en outre une section de raccord de fixation (66) destinée à une liaison opérante avec un élément tournant (64, 70) entraînable en rotation.

7. Moyeu de rotor selon la revendication 6, **caractérisé en ce que** la section de raccord de fixation (66) est réalisée sur l'élément de renfort (44).

8. Moyeu de rotor selon la revendication 6, **caractérisé en ce que** la section de raccord de fixation (66) est réalisée sur la section de raccord de montage (30) du corps creux (26) .

9. Moyeu de rotor selon l'une des revendications 1 à 8, **caractérisé en ce que** l'élément de renfort (44) présente des découpes.

10. Moyeu de rotor selon l'une des revendications 1 à 9, **caractérisé en ce que** chaque agencement de pale de rotor présente une pale de rotor et éventuellement un palier tournant de pale de rotor.

11. Agencement moyeu/élément, en particulier agencement moyeu/arbre pour le rotor d'une éolienne, doté d'un moyeu de rotor selon l'une des revendications 1 à 5, 9, 10, pour autant que les revendications 9 et 10 renvoient à une des revendications 1 à 5, doté
- d'un élément tournant entraînable en rotation sous forme d'un arbre (24), lequel est en liaison opérante avec le moyeu de rotor et définit l'axe de rotor (40),
- dans lequel la section de raccord de montage (30) du corps creux (26) est fixée à l'arbre (24) à une première position de celui-ci.

12. Agencement moyeu/élément selon la revendication 11, **caractérisé en ce que** l'élément de renfort (44) s'appuie sur l'arbre (24) à une deuxième position de celui-ci, axialement à distance de la première position le long de l'axe de rotor (40).

13. Agencement moyeu/élément, en particulier agencement moyeu/arbre pour le rotor d'une éolienne, doté d'un moyeu de rotor selon l'une des revendications 1 à 4 ou l'une des revendications 6 à 10 pour autant qu'elles renvoient à une des revendications 1 à 4, doté
- d'un élément tournant entraînable en rotation (64), lequel est disposé dans un composant présentant un palier de rotor (62) et définit l'axe de rotor (40),
- dans lequel le corps creux (26) peut être relié au palier de rotor (62) en rotation autour de l'axe de rotor (40) et
- dans lequel le corps creux (26) est en liaison opérationnelle avec l'élément tournant entraînable en rotation (64).

14. Agencement moyeu/élément selon la revendication 13, **caractérisé en ce que** l'élément de renfort (44) du moyeu de rotor (18) est en liaison opérationnelle avec l'élément tournant entraînable en rotation (64).

15. Agencement moyeu/élément selon la revendication 13, **caractérisé en ce que** la section de raccord de montage (30) du moyeu de rotor (18) est en liaison opérationnelle avec l'élément tournant entraînable en rotation (64).
